# EUROPÄISCHE PATENTSCHRIFT

(11) **EP 0 253 921 B1**
(45) Veröffentlichungstag und Bekanntmachung des Hinweises auf die Patenterteilung: **12.01.1994**
(21) Anmeldenummer: 86114764.3
(22) Anmeldetag: 23.10.1986
(51) Int. Cl.: G05D 23/13

(54) **Elektronisch temperaturgeregelte Mischarmatur**
Electronic temperature regulating mixing valve
Mélangeur thermostatique électronique

(30) Priorität: 23.07.1986 DE 3624799
(43) Veröffentlichungstag der Anmeldung: 27.01.1988
(73) Patentinhaber: IDEAL-STANDARD GMBH, D-53008 Bonn (DE)
(72) Erfinder: Bergmann, Konrad, Dr. Dipl.-Ing., D-5560 Wittlich (DE)
(74) Vertreter: Gesthuysen, Hans Dieter, Dipl.-Ing.

(56) Entgegenhaltungen:
- DE-A- 3 425 445
- GB-A- 2 143 343
- US-A- 4 556 956

## Beschreibung

Die Erfindung betrifft eine elektronisch temperaturgeregelte Mischarmatur, insbesondere für sanitäre Zwecke, mit einer elektronischen Temperaturregeleinrichtung, die ein aus der Differenz zwischen einer vorgegebenen Soll-Mischwassertemperatur und einer Ist-Mischwassertemperatur abgeleitetes und mit einer Regelkreisverstärkung beaufschlagtes Regelsignal erzeugt.

Bei der bekannten Mischarmatur, von der die Erfindung ausgeht (vgl. die DE - A - 34 25 445), wird die Mischwassertemperatur über eine einen Hauptregelkreis und einen Hilfsregelkreis aufweisende Regelung geregelt. Im Hauptregelkreis wird aus der Differenz zwischen einer vorgegebenen Soll-Mischwassertemperatur und einer stets zu ermittelnden Ist-Mischwassertemperatur in einer Temperaturregeleinrichtung ein Regelsignal abgeleitet, das im Falle einer Proportionalregelung mit einer einstellbaren Regelkreisverstärkung beaufschlagt wird. Im Hilfsregelkreis wird die augenblickliche Stellung des Mischventils oder die Ventilgeschwindigkeit ermittelt, als Stellungssignal bzw. als Geschwindigkeitssignal zu einem Vergleichsglied geleitet und dort mit dem Regelsignal aus der Temperaturregeleinrichtung verglichen. Das Regelsignal aus der Temperaturregeleinrichtung dient quasi als Stellungssignal bzw. als Geschwindigkeitssignal. Das Vergleichsglied liefert einem Stellungsregler bzw. einem Geschwindigkeitsregler ein Vergleichssignal, das dort im Falle einer Porportionalregelung mit einer Regelkreisverstärkung beaufschlagt, in ein Regelsignal umgewandelt und dem Antrieb der Mischarmatur zugeleitet wird. Die bekannte Mischarmatur reagiert also auf ein Regelsignal, das von der Ventilstellung bzw. von der Ventilgeschwindigkeit der Mischarmatur direkt beeinflußt ist wodurch sich die Regelzeit, d. h. die Zeit bis zum Erreichen der gewünschten Mischwassertemperatur, verringert.

Die bekannte Mischarmatur, von der die Erfindung ausgeht, ist jedoch in der Praxis problematisch, da die Regelkreisverstärkung auf die jeweilige Regelstrecke - Antrieb, Getriebe, Mischarmatur - abgestimmt werden muß, wenn ein übermäßiges Überschwingen bzw. ein starkes Oszillieren der Regelung vermieden werden soll. Hat man für eine bestimmte Regelstrecke eine geeignete Regelkreisverstärkung ermittelt und eingestellt, so kann beispielsweise durch starke Temperaturschwankungen der Einlauftemperaturen, durch Druckschwankungen in den Leitungen oder durch Kalkablagerungen an den Ventilteilen eine erneute, auf die durch die zuvor genannten Umstände nunmehr vorliegende Regelstrecke angepaßte Einstellung der Regelkreisverstärkung erforderlich werden. Eine auch noch so gut auf eine Regelstrecke abgestimmte Regelkreisverstärkung muß also ständig dann korrigiert werden, wenn Parameter der Regelstrecke einer Dynamik unterworfen sind was im Falle einer temperaturgeregelten Mischarmatur stets der Fall ist.

Im übrigen ist ein elektronisch geregeltes Venitl bekannt (vgl. die US - A - 4,556,956), das eine elektrische Regeleinrichtung aufweist und bei der aus der Differenz zwischen einem vorgegebenen Sollwert und einem Istwert ein Regelsignal abgeleitet und mit einer Regelkreisverstärkung beaufschlagt wird. Dabei wird die momentane Kennliniensteigung des Ventils weder erfaßt noch ermittelt.

Der Erfindung liegt nun die Aufgabe zugrunde, die bekannte Mischarmatur so auszugestalten und weiterzubilden, daß das Einschwingverhalten der Regelung unabhängig von der jeweiligen Betriebssituation an der Mischarmatur ist.

Die erfindungsgemäße Mischarmatur, bei der die zuvor hergeleitete und aufgezeigte Aufgabe gelöst ist, ist dadurch gekennzeichnet, daß die Regelkreisverstärkung umgekehrt proportional oder umgekehrt überproportional von der momentanen Kennliniensteigung der Mischarmatur abhängig ist und die momentane Kennliniensteigung aus den momentan vorhandenen Zustandsgrößen der Mischarmatur ermittelt ist. Dabei kann die Kennliniensteigung der Mischarmatur mittels einfacher algebraischer Gleichungen ermittelt werden und zwar entweder aus dem jeweiligen Druckabfall an den Ventilöffnungen, den Zulauftemperaturen des zu mischenden kalten und heißen Wasser und den Ventilstellungen oder aus der Ist-Mischwassertemperatur oder der Soll-Mischwassertemperatur, den Zulauftemperaturen des zu mischenden kalten und heißen Wassers und den Ventilstellungen.

Erfindungsgemäß ist erkannt worden, daß ein übermäßiges Überschwingen der Regelung bei sich ändernden Betriebsbedingungen des Mischventils durch Anpassung der Regelkreisverstärkung an die das Zeitverhalten (Übertragungsverhalten) der Mischarmatur (Regelstrecke) bestimmenden momentan vorhandenen Zustandsgrößen der Mischarmatur verhindert werden kann. Dabei ist die Regelkreisverstärkung zumindest näherungsweise umgekehrt proportional oder umgekehrt überproportional abhängig von der Kennliniensteigung der Mischarmatur. Wesentlich ist, daß die jeweilige Kennliniensteigung der Mischarmatur aus der momentan an der Mischarmatur vorhandenen Zustandsgröße ermittelt wird. Das Einschwingverhalten des Regelkreises wird dadurch optimiert daß die das Zeitverhalten (Übertragungsverhalten) der Mischarmatur (Regelstrecke) beeinflussenden, momentan vorhandenen Zustandsgrößen gemessen und permanent zur Abstimmung der Regelkreisverstärkung herangezogen werden. Durch dieses Vorgehen ist eine Adaption an das dynamische Verhalten der Mischarmatur (Regelstrecke) erreicht. Das erfindungsgemäß erreichte dynamische Verhalten entspricht in etwa dem Verhalten des Benutzers eines Einhebelmischers. Der Benutzer muß nämlich herusfinden, welche Temperaturänderung bei einer bestimmten Stellungsänderung der Mischarmatur eintritt, und kann danach seine Regeleingriffe bemessen. Er muß sich also ebenfalls an die das Zeitverhalten (Übertragungsverhalten) der Mischarmatur bestimmenden, momentan vorhandenen Zustandsgrößen anpassen.

Im übrigen sind selbstanpassende Regelkreise für sich bekannt (vgl. die DE-AS-1 523 535 und DE-AS-1 906 836). Dabei ist ein Hinweis zur Anwendung in Mischarmaturen mit einer elektrischen Temperaturregeleinrichtung nicht gegeben.

Im folgenden wird die Erfindung anhand einer lediglich ein Ausführungsbeispiel darstellenden Zeichnung weiter erläutert; es zeigt
- Fig. 1a: einen Regelkreis mit einer steuerbaren Regelkreisverstärkung K_{R},
- Fig. 1b: einen Regelkreis, in dem der Regler Geschwindigkeits- bzw. Winkelgeschwindigkeitssignale vorgibt,
- Fig. 1c: einen Regelkreis, bei dem der Regler Ventilstellungen vorgibt,
- Fig. 2: ausgehend von festen Kaltwasser- und Heißwassertemperaturen den Verlauf der Mischwassertemperaturen T_{M} als Funktion der Stellwinkel bei unterschiedlichen Druckverhältnissen (π = Δ_{PK} : Δ_{PH}),
- Fig. 3: den Einfluß unterschiedlicher Zulauftemperaturen und
- Fig. 4: den Einfluß unterschiedlicher Stellwinkel.

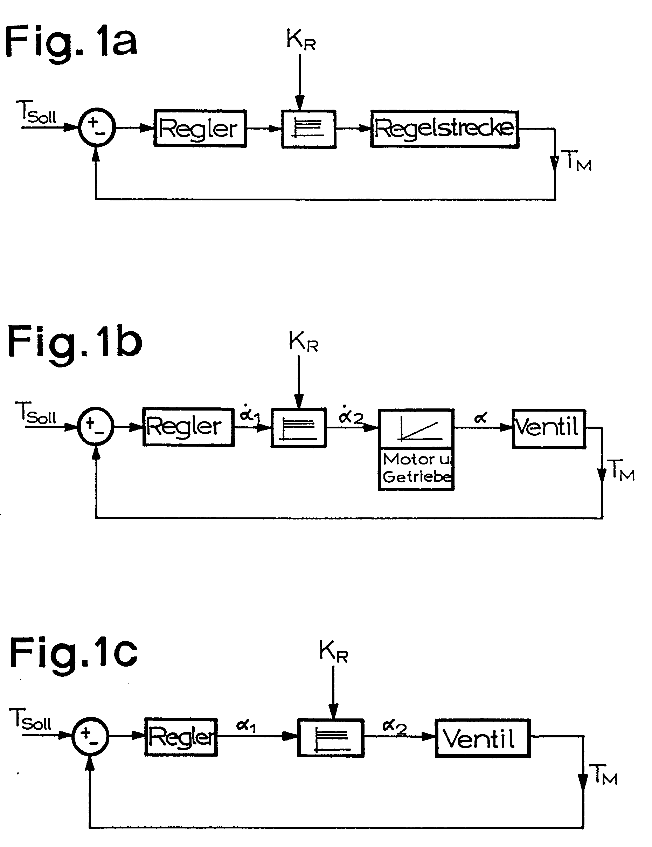

In den Fig. 1a, 1b und 1c ist angedeutet, daß erfindungsgemäß die Regelkreisverstärkung K_{R} zumindest näherungsweise umgekehrt proportional oder umgekehrt überproportional von der momentanen Kennliniensteigung der Mischarmatur abhängig ist und die momentane Kennliniensteigung aus den momentan vorhandenen Zustandsgrößen der Mischarmatur ermittelt ist.

Im Ausführungsbeispiel nach Fig. 1b gibt der Regler Geschwindigkeits- bzw. Winkelgeschwindigkeitssignale vor. Die vorgegebenen Geschwindigkeits- bzw. Winkelgeschwindigkeitssignale werden von dem Getriebemotor aufintegriert, so daß die Mischarmatur (Regelstrecke) ein integrales Verhalten aufweist.

Im Ausführungsbeispiel nach Fig. 1c gibt der Regler Ventilstellungen vor. Die Mischarmatur (Regelstrecke) weist folglich proportionales Verhalten auf.

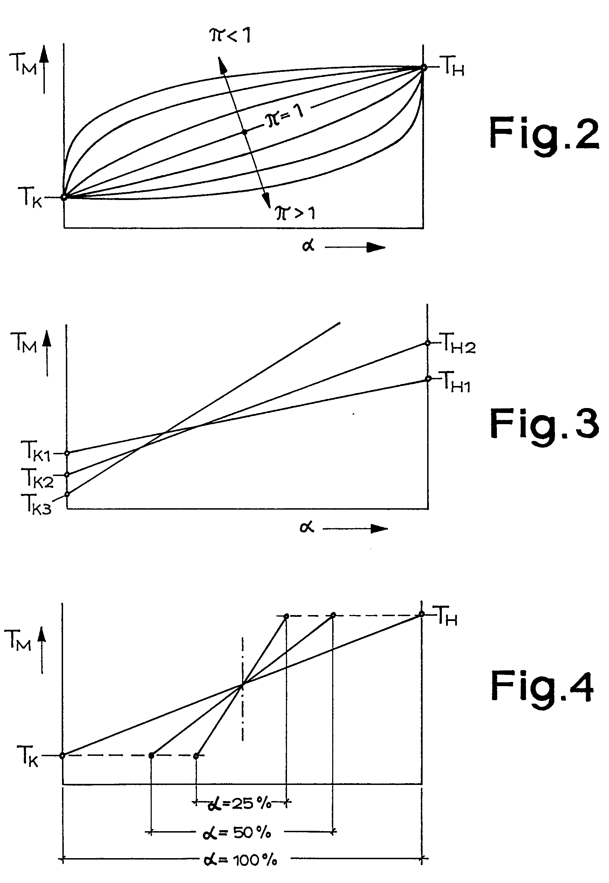

Fig. 2 kann entnommen werden, daß bei gleichen Druckabfällen am Kaltwasserventil und am Heißwasserventil, also bei π = 1 eine Gerade als Kennlinie vorliegt. Bei Druckverhältnissen π > 1 ergeben sich nach unten gebeulte, bei Druckverhältnissen π < 1 nach oben gebeulte Kennlinien. Bei der Mitteltemperatur T_{M} = (T_{K} + T_{H}) : 2 erhält man demzufolge sowohl bei π > 1 als auch bei π < 1 erhöhte Kennliniensteigungen, so daß eine entsprechende Rücknahme der Reglerverstärkung geboten ist.

Für die Fig. 3 gilt das Druckverhältnis π = 1. Es ist evident, daß sich die Kennliniensteigung proportionalzur Differenz der Zulauftemperaturen verhält.

Für Fig. 4. gilt, daß das Druckverhältnis π = 1 ist und die Zulauftemperaturen konstant sind. Hier verhält sich die Kennliniensteigung umgekehrt proportional zur relativen Gesamtöffnung der Ventile.

Als Regler können solche mit P-Verhalten, I-Verhalten, D-Verhalten, PI-Verhalten, PD-Verhalten oder PID-Verhalten verwendet werden. Dabei kann sich die erfindungsgemäße Steuerung der Reglerverstärkung auf den P-Anteil, den I-Anteil oder den D-Anteil des Reglers beschränken.

## Patentansprüche

1. Elektronisch temperaturgeregelte Mischarmatur, insbesondere für sanitäre Zwecke, mit einer elektronischen Temperaturregeleinrichtung, die ein aus der Differenz zwischen einer vorgegebenen Soll-Mischwassertemperatur (T_{Soll}) und einer Ist-Mischwassertemperatur (T_{M}) abgeleitetes und mit einer Regelkreisverstärkung (K_{R}) beaufschlagtes Regelsignal erzeugt, **dadurch gekennzeichnet**, daß die Regelkreisverstärkung (K_{R}) umgekehrt proportional oder umgekehrt überproportional von der momentanen Kennliniensteigung der Mischarmatur abhängig ist und die momentane Kennliniensteigung aus den momentan vorhandenen Zustandsgrößen der Mischarmatur ermittelt ist.

2. Elektronisch temperaturgeregelte Mischarmatur nach Anspruch 1, dadurch gekennzeichnet, daß die Kennliniensteigung der Mischarmatur mittels einfacher algebraischer Gleichungen aus dem jeweiligen Druckabfall an den Ventilöffnungen, den Zulauftemperaturen (T_{K},T_{H}) des zu mischenden kalten und heißen Wassers und den Ventilstellungen α ermittelt ist.

3. Elektronisch temperaturgeregelte Mischarmatur nach Anspruch 1, dadurch gekennzeichnet, daß die Kennliniensteigung der Mischarmatur mittels einfacher algebraischer Gleichungen aus der Ist-Mischwassertemperatur oder der Soll-Mischwassertemperatur, den Zulauftemperaturen (T_{K},T_{H}) des zu mischenden kalten und heißen Wassers und den Ventilstellungen (α) ermittelt ist.

## Claims

1. An electronic temperature-controlled mixer fitting, particularly for sanitary purposes, with an electronic temperature controller which generates a control signal which is derived from the difference between a predetermined set mixed water temperature (T_{Set}) and an actual mixed water temperature (T_{M}) and is subjected to a control circuit amplification (K_{R}), characterised in that the control circuit amplification (K_{R}) is dependent on and is inversely proportional or inversely superproportional to the instantaneous gradient of the characteristic curve of the mixer fitting, and the instantaneous gradient of the characteristic curve is determined from the instantaneously existing state variables of the mixer fitting.

2. An electronic temperature-controlled mixer fitting according to claim 1, characterised in that the gradient of the characteristic curve of the mixer fitting is determined by means of simple algebraic equations from the respective pressure drop at the valve openings, from the inlet temperatures (T_{K}, T_{H}) of the cold and hot water to be mixed and from the valve positions (α).

3. An electronic temperature-controlled mixer fitting according to claim 1, characterised in that the gradient of the characteristic curve of the mixer fitting is determined by means of simple algebraic equations from the actual mixed water temperature or the set mixed water temperature, from the inlet temperatures (T_{K}, T_{H}) of the cold and hot water to be mixed and from the valve positions (α).

## Revendications

1. Mélangeur à thermorégulation électrique, notamment à usage sanitaire, comportant un dispositif de thermorégulation électronique, qui produit un signal de régulation, qui est obtenu à partir de la différence entre une température prédéterminée de consigne de l'eau de mélange (T_{consigne}) et une température réelle de l'eau de mélange (T_{M}) et est soumis à une amplification (KR) produite par le circuit de régulation, caractérisé en ce que l'amplification (KR) fournie par le circuit de régulation dépend, d'une manière inversement proportionnelle ou inversement plus que proportionnelle, de la pente instantanée de la courbe caractéristique du mélangeur et que la pente instantanée de la courbe caractéristique est déterminée à partir des grandeurs d'état du mélangeur, qui sont présentes instantanément.

2. Mélangeur à thermorégulation électronique selon la revendication 1, caractérisé en ce que la pente de la courbe caractéristique du mélangeur est déterminée au moyen de relations algébriques simples à partir de la chute de pression respective dans les ouvertures de soupape, les températures (T_{K}, T_{H}) dans le circuit aller de l'eau froide et de l'eau chaude à mélanger, et des positions (α) des soupapes.

3. Mélangeur à thermorégulation électronique selon la revendication 1, caractérisé en ce que la pente de la courbe caractéristique du mélangeur est déterminée au moyen de relations algébriques simples à partir de la température réelle de l'eau de mélange ou de la température de consigne de l'eau de mélange, des températures (T_{K}, T_{H}) du circuit aller de l'eau froide et de l'eau chaude devant être mélangées, et des positions (α) des soupapes.
